# EUROPÄISCHE PATENTANMELDUNG

(11) **EP 4 708 604 A1**
(43) Veröffentlichungstag der Anmeldung: **11.03.2026**
(21) Anmeldenummer: 24198850.0
(22) Anmeldetag: 06.09.2024
(51) Int. Cl.: H02J 1/08, B60L 50/53, E21F 17/06, H02J 1/14

(54) **ELEKTRISCH BETRIEBENE TIEFBAUMASCHINE UND VERFAHREN ZUM ELEKTRISCHEN BETREIBEN EINER TIEFBAUMASCHINE**

(71) Anmelder: BAUER Maschinen GmbH, 86529 Schrobenhausen (DE)
(72) Erfinder: Osterland, Matthias, 86529 Schrobenhausen (DE); Voigt, Marco, 86529 Schrobenhausen (DE)
(74) Vertreter: Wunderlich & Heim Patentanwälte PartG mbB

(57) **Zusammenfassung**

Die Erfindung betrifft eine elektrisch betriebene Tiefbaumaschine mit einem mobilen Trägergerät, mindestens einer elektrischen Verbrauchseinheit, mindestens einer internen aufladbaren Batterieeinheit zum Speichern und Abgeben von elektrischer Energie, mindestens einer Zuführeinrichtung zum Zuführen elektrischer Energie von einer externen Energiequelle und einer Schaltungsanordnung zum bedarfsgerechten Zuführen und Abführen von elektrischer Energie an die und von der mindestens einen elektrischen Verbrauchseinheit, wobei die Schaltungsanordnung ausgebildet ist, mittels eines Zwischenkreises elektrische Energie zwischen der mindestens einen elektrischen Verbrauchseinheit und der Zuführeinrichtung zu verteilen. Nach der Erfindung ist vorgesehen, dass die Schaltungsanordnung einen ersten Zwischenkreis und einen zweiten Zwischenkreis umfasst, dass der erste Zwischenkreis mit einer ersten Spannungslage betreibbar ist und dass der zweite Zwischenkreis mit einer zweiten Spannungslage betreibbar ist, welche unterschiedlich zu der ersten Spannungslage ist.

## Beschreibung

Die Erfindung betrifft eine elektrisch betriebene Tiefbaumaschine mit einem mobilen Trägergerät, mindestens einer elektrischen Verbrauchseinheit, mindestens einer internen aufladbaren Batterieeinheit zum Speichern und Abgeben von elektrischer Energie, mindestens einer Zuführeinrichtung zum Zuführen elektrischer Energie von einer externen Energiequelle und einer Schaltungsanordnung zum bedarfsgerechten Zuführen und Abführen von elektrischer Energie an die und von der mindestens einen elektrischen Verbrauchseinheit, wobei die Schaltungsanordnung ausgebildet ist, mittels eines Zwischenkreises elektrische Energie zwischen der mindestens einen elektrischen Verbrauchseinheit und der Zuführeinrichtung zu verteilen, gemäß dem Oberbegriff des Anspruchs 1.

Die Erfindung betrifft weiterhin ein Verfahren zum elektrischen Betreiben einer Tiefbaumaschine mit einem mobilen Trägergerät, mindestens einer elektrischen Verbrauchseinheit, mindestens einer internen aufladbaren Batterieeinheit zum Speichern und Abgeben von elektrischer Energie, mindestens einer Zuführeinrichtung zum Zuführen elektrischer Energie von einer externen Energiequelle und einer Schaltungsanordnung zum bedarfsgerechten Zuführen und Abführen von elektrischer Energie an die und von der mindestens einen elektrischen Verbrauchseinheit, wobei die Schaltungsanordnung mittels eines Zwischenkreises elektrische Energie zwischen der mindestens einen elektrischen Verbrauchseinheit und der Zuführeinrichtung verteilt, gemäß dem Oberbegriff des Anspruchs 10.

Rein elektrisch angetriebene Tiefbaumaschinen sind seit längerem bekannt und werden insbesondere an Arbeitsorten eingesetzt, an denen Lärm, Erschütterungen und Abgase unerwünscht sind, wie sie beispielsweise bei mit Verbrennungsmotor betriebenen Tiefbaumaschinen verstärkt auftreten. Aufgrund des hohen Energiebedarfs derartiger elektrisch betriebener Tiefbaumaschinen weisen diese eine Zuführeinrichtung zum Zuführen elektrischer Energie von einer externen Stromquelle auf, insbesondere einem elektrischen Stromnetz. Hierfür ist das Vorsehen einer entsprechenden elektrischen Leitung erforderlich.

Weiterhin sind elektrisch betriebene Tiefbaumaschinen auch mit einer wiederaufladbaren Batterieeinheit versehen, welche insbesondere dazu dient, die mobile Tiefbaumaschine bei einem Bewegen oder Verfahren, bei welchen häufig eine Trennung der elektrischen Leitungsverbindung erfolgt, mit ausreichender elektrischer Energie zu versorgen.

Die Speicherung von elektrischer Energie in einer internen Batterieeinheit erlaubt zudem, bei Energie-Verbrauchsspitzen der Tiefbaumaschine, welche nicht vollständig durch die normale Energiezuführung über die Zuführeinrichtung aus dem angeschlossenen externen Stromnetz gedeckt werden können, dass zusätzlich elektrische Energie aus der internen Batterieeinheit zur Deckung des Spitzenenergiebedarfs abgerufen werden kann.

Für einen effizienten Betrieb der Tiefbaumaschine ist dabei eine bedarfsgerechte Steuerung und Verteilung der Energie an der Tiefbaumaschine von wesentlicher Bedeutung. Aus der EP 4 245 923 B1 geht eine elektrisch betriebene Tiefbaumaschine mit einem Zwischenkreis und einer Zuführeinrichtung hervor. Der Zwischenkreis ist als elektrischer Leiter ausgebildet, an den Verbrauchseinheiten, insbesondere eine Batterieeinheit und ein Elektromotor, angeschlossen sind. Aus dem Zwischenkreis kann hierbei elektrische Energie über eine Invertereinheit einem Elektromotor zugeführt werden, wobei die Invertereinheit ausgebildet ist, in einem Rekuperationsmodus des Elektromotors Energie an den Zwischenkreis zurückzuführen. Zur effizienten Energieverteilung erfolgt die Spannungssteuerung des Zwischenkreises abhängig von einer Spannung im Zwischenkreis mit Reglerkomponenten, die einzelnen Verbrauchseinheiten zugeordnet sind.

Der Erfindung liegt die **Aufgabe** zugrunde, eine elektrisch betriebene Tiefbaumaschine und ein Verfahren zum Betreiben hierfür anzugeben, mit welchen ein besonders wirtschaftlicher und effizienter Betrieb der Tiefbaumaschine ermöglicht wird.

Die Aufgabe wird zum einen durch eine Tiefbaumaschine mit den Merkmalen des Anspruchs 1 und zum anderen durch ein Verfahren mit den Merkmalen des Anspruchs 10 gelöst. Bevorzugte Ausführungen sind in den jeweiligen abhängigen Ansprüchen angegeben.

Die erfindungsgemäße Tiefbaumaschine ist derart ausgebildet, dass die Schaltungsanordnung einen ersten Zwischenkreis und einen zweiten Zwischenkreis umfasst, dass der erste Zwischenkreis mit einer ersten Spannungslage betreibbar ist und dass der zweite Zwischenkreis mit einer zweiten Spannungslage betreibbar ist, welche unterschiedlich zu der ersten Spannungslage ist.

Eine Grundidee der Erfindung besteht darin, bei einem Energiebordnetz einer elektrisch betriebenen Tiefbaumaschine von einem einzigen zentralen Zwischenkreis abzugehen. Dies wird dadurch erreicht, dass eine Schaltungsanordnung mit zwei Zwischenkreisen vorgesehen ist, die zwei unterschiedliche Spannungslagen führen. Den unterschiedlichen Zwischenkreisen sind verschiedene Verbrauchseinheiten für verschiedene Betriebsbereiche zugeordnet. Je nach Energie und Leistungsverbrauch können die Verbrauchseinheiten jeweils passend an einen Zwischenkreis angeschlossen werden, wodurch zusätzliche Wandler eingespart werden. Durch die verschiedenen Spannungslagen kann das System insgesamt sehr flexibel eingesetzt werden. Je nach Betriebsart der Baumaschine können die Zwischenkreise verschiedenartig mit einer Zuführeinrichtung aus einem lokalen Stromnetz und direkt aus einer Batterieeinheit gespeist werden. Hierdurch wird gewährleistet, dass bestimmte Verbrauchseinheiten auch beim Verstellen oder Verfahren der Tiefbaumaschine ohne Stromanschluss an ein lokales Stromnetz betrieben werden können.

Eine bevorzugte Ausführungsform der Erfindung besteht darin, dass mindestens zwei Zwischenkreise vorgesehen sind. Vorteilhaft ist es dabei, wenn die Zwischenkreise jeweils verschiedene Spannungslagen aufweisen, wobei die Spannungslagen auf den Betrieb bestimmter Verbraucher angepasst sind, beispielsweise um zusätzliche Wandlereinheiten zu vermeiden. Besonders bevorzugt ist es, wenn die Zwischenkreise redundant ausgelegt sind, um mögliche Ausfälle zu kompensieren. Hierdurch wird ein besonders sicherer Betrieb gewährleistet.

Grundsätzlich können die Zwischenkreise beliebig ausgebildet sein. Eine besonders vorteilhafte Ausführungsform der Erfindung wird dadurch erzielt, dass die Zwischenkreise unabhängig voneinander als geschlossene Stromkreise betreibbar sind und dass zumindest zwei Zwischenkreise mit einer Schalteinrichtung, insbesondere einer Trenneinrichtung, zu einem Gesamtkreis verbindbar sind. Die Schalteinrichtung kann insbesondere als Schutzschalter zum Trennen und Verbinden der Zwischenkreise ausgebildet sein. Die Schalteinrichtung kann ebenso als Wandlereinheit zum Herstellen einer elektrischen Verbindung ausgebildet sein. Durch das Verbinden der beiden Zwischenkreise mit einer Schalteinrichtung kann elektrische Energie bedarfsweise von einem Zwischenkreis in den anderen Zwischenkreis geleitet werden. Besonders vorteilhaft ist es, wenn der erste Zwischenkreis mit dem zweiten Zwischenkreis mit einem DC/DC Steller verbunden ist, wobei die Batterieeinheit zum Ausgleich von Lastspitzen ausgebildet ist. Hierdurch können beim Betrieb entstehende Leistungsspitzen durch die Batterieeinheit unmittelbar ausgeglichen werden. Umgekehrt kann beim Betrieb der erfindungsgemäßen Tiefbaumaschine an einem Stromnetz überschüssige Energie von dem ersten Zwischenkreis zum Laden der Batterieeinheit in den zweiten Zwischenkreis geführt werden. Nach einer Weiterbildung der Erfindung ist es ebenso zweckdienlich, dass der erste Zwischenkreis mit dem zweiten Zwischenkreis verbindbar ist, wobei der erste und der zweite Zwischenkreis dieselbe Spannungslage aufweisen. Dabei kann die Batterieeinheit zum Ausgleich von Leistungsspitzen vorgesehen sein.

Die Schalteinrichtung kann mit einer Sicherheitseinrichtung ausgebildet sein, um bei plötzlich auftretenden Leistungsspitzen die Verbindung zwischen dem ersten und dem zweiten Zwischenkreis zu trennen. Zweckmäßig ist es, wenn die Schalteinrichtung von einer Steuereinheit steuerbar ist, um so beispielsweise durch Eingabe des Bedienpersonals die Zwischenkreise abhängig vom Betriebszustand der Tiefbaumaschine zu trennen oder zu verbinden.

Eine weitere vorteilhafte Ausgestaltung der Erfindung besteht darin, dass ein Zwischenkreis zum Zuführen und Abführen von elektrischer Energie in die Batterieeinheit ausgebildet ist, wobei die Batterieeinheit zur Steuerung der Spannungslage zum Ausgleich von Leistungsspitzen des Zwischenkreises ausgebildet ist. Durch eine geeignete Auslegung der Spannungslage des Zwischenkreises kann die Batterieeinheit vorzugsweise ohne zusätzliche Wandlereinheit mit dem Zwischenkreis verbunden werden. Die Spannungslage des Zwischenkreises kann dabei beispielhaft etwa zwischen 400 Volt und 800 Volt liegen. Die Steuerung der Spannungslage erfolgt somit zentral abhängig von dem Ladezustand der Batterieeinheit.

Eine besonders zweckmäßige Weiterbildung der Erfindung besteht darin, dass mindestens eine Verbrauchseinheit einen DC/DC-Steller umfasst. Hierdurch kann eine große Zahl von Peripheriegeräten, beispielsweise eine Kühleinrichtung und eine Heizeinrichtung mit der Schaltungsanordnung besonders effizient verbunden werden. Der DC/DC-Steller kann grundsätzlich getrennt von der Verbrauchseinheit oder als Einheit mit der Verbrauchseinheit ausgebildet sein. Zweckdienlich ist es, wenn der DC/DC Steller zur bidirektionalen Energieversorgung ausgebildet ist. Vorteilhaft ist es insbesondere, wenn mit dem DC/DC-Steller ein Niederspannungsbordnetz, vorzugsweise ein 12 Volt, 24 Volt und/oder 48 Volt-Bordnetz mit mindestens einem Zwischenkreis verbunden ist. Mit dem DC/DC-Steller kann eine an einem Eingang zugeführte Gleichspannung in eine Gleichspannung mit höherem, niedrigerem oder invertierten Spannungsniveau umgewandelt werden. Derartige Gleichstromsteller sind insbesondere selbst geführte Stromrichter.

Nach einer anderen Ausführungsvariante der Erfindung ist es vorteilhaft, dass die Zwischenkreise zum Leiten und Verteilen von Gleichstrom ausgebildet sind.

Eine weitere besonders vorteilhafte Ausgestaltung der Erfindung ist darin zu sehen, dass die mindestens eine elektrische Verbrauchseinheit als Elektromotor ausgebildet ist, wobei dem Elektromotor eine Invertereinheit zugeordnet ist, welche zur Umsetzung von Gleichstrom in Wechselstrom ausgebildet ist. Die Invertereinheit umfasst insbesondere einen Gleich- beziehungsweise Wechselrichter, welcher in beide Richtungen Strom wandeln kann. So kann einerseits Gleichstrom aus dem Zwischenkreis dem Elektromotor als Wechselstrom zugeführt werden, während andererseits in einem Rekuperationsbetrieb des Elektromotors erzeugte elektrische Energie von einem Wechselstrom in einen Gleichstrom zur Abgabe an den Zwischenkreis gewandelt werden kann.

Eine besonders vorteilhafte Weiterbildung der Erfindung wird dadurch erzielt, dass eine erste Zuführeinrichtung zum Zuführen und Wandeln von elektrischer Energie, insbesondere Wechselspannung, aus einem ersten elektrischen Stromnetz mit einer ersten Spannung, ausgebildet ist und dass eine zweite Zuführeinrichtung zum Zuführen und Wandeln von elektrischer Energie, insbesondere Wechselspannung, aus einem zweiten elektrischen Stromnetz mit einer zweiten Spannung ausgebildet ist, wobei die zweite Spannung unterschiedlich zu der ersten Spannung ist. Durch das Ausbilden von zwei Zuführeinrichtungen kann die erfindungsgemäße Tiefbaumaschine abhängig vom Betriebszustand besonders vielfältig und flexibel mit elektrischer Energie versorgt werden. Die zweite Zuführeinrichtung kann vorzugsweise, wenn die erste Zuführeinrichtung nicht mit elektrischer Energie versorgt wird, zum Laden der Batterieeinheit und/oder für einen eingeschränkten Betrieb der Tiefbaumaschine ausgebildet sein. Allgemein mögliche Betriebsarten der erfindungsgemäßen Tiefbaumaschine werden nachfolgend in der Figurenbeschreibung beispielhaft näher erläutert.

Vorteilhaft ist es, wenn die erste Zuführeinrichtung zum Zuführen einer elektrischen Leistung von mindestens 100 kVA, vorzugsweise mehreren 100 kVA, ausgebildet ist. Besonders zweckdienlich ist es, wenn die zugeführte Spannungslage der ersten Zuführeinrichtung größer oder gleich zu der zugeführten Spannungslage der zweiten Zuführeinrichtung ist. Insbesondere kann eine zugeführte Spannungslage der ersten Zuführeinrichtung von 690 V als Wechselspannung vorgesehen sein. Als zugeführte Spannungslage der zweiten Zuführeinrichtung kann insbesondere 400 V Wechselspannung vorgesehen sein. Zweckdienlich ist es insbesondere auch, wenn die zugeführte erste Spannungslage der ersten Zuführeinrichtung der zugeführten zweiten Spannungslage der zweiten Zuführeinrichtung entspricht.

Grundsätzlich können sowohl die erste Zuführeinrichtung als auch die zweite Zuführeinrichtung an ein erstes bzw. zweites Stromnetz, beispielsweise mit 690 Volt oder 400 Volt, angeschlossen sein und mindestens eine Wandlereinheit umfassen. Die Wandlereinheit kann vorzugsweise als Gleichrichter zum Wandeln von Wechselspannung aus dem Stromnetz oder als Transformator ausgebildet sein. Die elektrisch betriebene Tiefbaumaschine kann eine erste Zuführeinrichtung als Primäreinspeisung zum Zuführen von elektrischer Energie für den regulären Arbeitsbetrieb und eine zweite Zuführeinrichtung als Sekundäreinspeisung zur Energieversorgung der Peripherieverbrauchseinheiten und der Batterieeinheit aufweisen.

Nach einer Weiterbildung der Erfindung kann es zweckdienlich sein, dass der zweiten Zuführeinrichtung eine Transformatoreinheit zugeordnet ist und die zweite Zuführeinrichtung zum Zuführen und Wandeln von elektrischer Energie aus dem ersten elektrischen Stromnetz mit der ersten Spannung ausgebildet ist. Das heißt, dass elektrische Energie aus dem ersten elektrischen Stromnetz sowohl in den ersten als auch in den zweiten Zwischenkreis zugeführt werden kann. Die elektrische Tiefbaumaschine kann somit beispielsweise im stationären Arbeitsbetrieb mit einem lokalen Stromnetz verbunden sein und so vollständig elektrisch betrieben werden, wobei auch die Batterieeinheit geladen werden kann. Hierdurch kann in einem urbanen Umfeld ein besonders umweltfreundlicher Betrieb der Tiefbaumaschine sichergestellt werden. Alternativ oder ergänzend dazu kann die elektrische Tiefbaumaschine, von dem Stromnetz getrennt, mittels der Batterieeinheit betrieben werden. Somit kann insbesondere zum Verstellen oder Verfahren ein rein elektrischer Batteriebetrieb vorgesehen sein. Zweckdienlich dafür ist es, wenn die Batterieeinheit unabhängig von der ersten Zuführeinrichtung mit der zweiten Zuführeinrichtung durch Anschluss an ein lokales Stromnetz geladen wird.

Die Tiefbaumaschine kann einen Ausleger oder einen Mast aufweisen, an welchem ein Bohrantrieb mit einem Bohrwerkzeug, eine Schlitzwandfräse, ein Schlitzwandgreifer, ein Rüttler oder eine Ramme angeordnet sind.

Das erfindungsgemäße Verfahren ist dadurch gekennzeichnet, dass die Schaltungsanordnung einen ersten Zwischenkreis und einen zweiten Zwischenkreis umfasst, wobei der erste Zwischenkreis mit einer ersten Spannungslage betrieben wird und dass der zweite Zwischenkreis mit einer zweiten Spannungslage betrieben wird, welche unterschiedlich zu der ersten Spannungslage ist.

Das Verfahren kann insbesondere bei der zuvor beschriebenen erfindungsgemäßen Tiefbaumaschine eingesetzt werden. Dabei können die zuvor beschriebenen Vorteile erzielt werden.

Eine bevorzugte Verfahrensvariante der Erfindung besteht darin, dass die Zwischenkreise unabhängig voneinander als geschlossene Stromkreise betrieben werden und dass bei Bedarf die Zwischenkreise mittels einer Schalteinrichtung, insbesondere einem DC/DC-Steller, zu einem Gesamtkreis verbunden werden, wobei elektrische Energie zwischen den beiden Zwischenkreisen bedarfsgerecht verteilt wird. Insbesondere bei Auftreten von Lastspitzen in einem Zwischenkreis kann so elektrische Energie von dem einem zu dem anderen Zwischenkreis zum Lastausgleich zugeführt werden. Es ist zweckmäßig, wenn die Spannungslage der jeweiligen Zwischenkreise auf den Leistungsbedarf der Verbrauchseinheiten, insbesondere der Fräse und eines Elektromotors ausgelegt sind, um Kabelquerschnitte und damit Gewicht zu reduzieren. Ebenso können durch die zwei unterschiedlichen Spannungslagen zusätzliche Wandlereinrichtungen entfallen, wodurch die Energieeffizienz deutlich verbessert wird. Grundsätzlich kann durch das Herstellen eines Gesamtkreises sowie dem Ausbilden mehrere Zuführeinrichtungen der Ausfall einer Zuführeinrichtung kompensiert werden. Besonders vorteilhaft ist es, dass die Zwischenkreise zu einem Gesamtkreis verbunden werden und die Verbrauchseinheiten des ersten und des zweiten Zwischenkreises oder weiterer Zwischenkreise mit derselben Spannungslage betrieben werden.

Es ist vorteilhaft, wenn der erste Zwischenkreis als Leistungsteil, insbesondere als Hochleistungsbordnetz, mit einer Spannungslage von etwa 800 Volt bis 1.500 Volt, insbesondere 1.100 Volt, vorgesehen ist. Der zweite Zwischenkreis kann vorzugsweise als Peripherieteil, insbesondere als Niederleistungsbordnetz, mit einer niedrigeren Spannungslage, insbesondere zwischen 600 Volt und 800 Volt oder auch zwischen 300 Volt und 400 Volt, vorgesehen sein. Alternativ dazu können beide Zwischenkreise dieselbe Spannungslage, insbesondere die niedrigere Spannungslage zwischen 300V und 800V, aufweisen. Hierdurch wird die Komplexität der Schalteinrichtung reduziert.

Eine weitere besonders vorteilhafte Verfahrensvariante besteht nach der Erfindung darin, dass mittels einer ersten Zuführeinrichtung elektrische Energie, insbesondere Wechselspannung, aus einem ersten elektrischen Stromnetz mit einer ersten Spannung zugeführt und insbesondere gewandelt wird und mittels einer zweiten Zuführeinrichtung elektrische Energie, insbesondere Wechselspannung, aus einem zweiten elektrischen Stromnetz mit einer zweiten Spannung zugeführt und insbesondere gewandelt wird, wobei die zweite Spannung unterschiedlich zu der ersten Spannung ist. Mit anderen Worten kann nach dem erfindungsgemäßen Verfahren die Tiefbaumaschine mit elektrischer Energie aus einem ersten elektrischen Stromnetz und/oder aus einem zweiten elektrischen Stromnetz betrieben werden. Bei Bedarf kann sowohl dem ersten als auch dem zweiten Zwischenkreis aus dem ersten und/oder dem zweiten elektrischen Stromnetz Energie zugeleitet werden. Die Energie kann dabei dem jeweiligen Zwischenkreis sowohl über die Zuführeinrichtung als auch über die Schalteinrichtung zugeführt werden. Dies ermöglicht eine zuverlässige und schnelle Energieverteilung.

Die Erfindung wird nachfolgend anhand von bevorzugten Ausführungsbeispielen weiter erläutert, welche schematisch in den Zeichnungen dargestellt sind. In den Zeichnungen zeigen
- Fig. 1:: eine Seitenansicht einer erfindungsgemäßen Tiefbaumaschine;
- Fig. 2:: eine schematische Darstellung einer Schaltungsanordnung nach der Erfindung mit zwei Zwischenkreisen und möglichen Komponenten;
- Fig. 3:: eine schematische Darstellung einer Schaltungsanordnung nach der Erfindung nach einer zusätzlichen Betriebsart der Tiefbaumaschine;
- Fig. 4:: eine schematische Darstellung einer Schaltungsanordnung nach der Erfindung nach einer zusätzlichen Betriebsart der Tiefbaumaschine;
- Fig. 5:: eine schematische Darstellung einer Schaltungsanordnung nach der Erfindung nach einer zusätzlichen Betriebsart der Tiefbaumaschine;
- Fig. 6:: eine schematische Darstellung einer Schaltungsanordnung nach der Erfindung nach einer zusätzlichen Betriebsart der Tiefbaumaschine; und
- Fig. 7:: eine schematische Darstellung einer Schaltungsanordnung nach der Erfindung mit zwei Zwischenkreisen und ergänzten möglichen Komponenten.

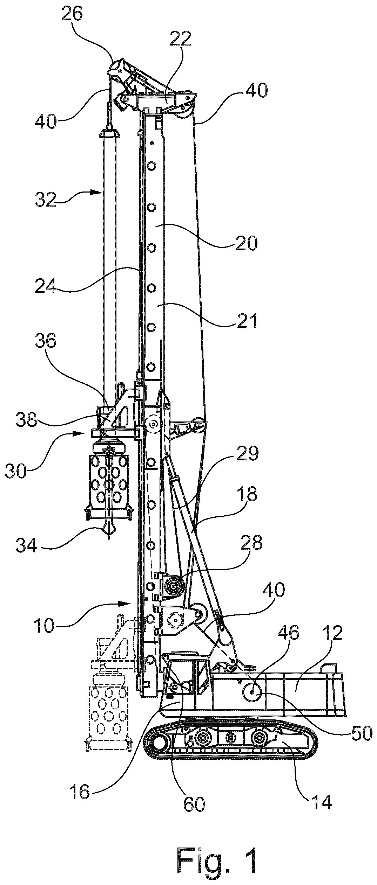

Eine erfindungsgemäße Tiefbaumaschine 10 mit einem Trägergerät 12 ist in Fig. 1 gezeigt. Das Trägergerät 12 kann vorzugsweise ein Raupenfahrwerk als Unterwagen 14 umfassen, auf welchem ein Oberwagen 16 insbesondere drehbar gelagert sein kann. In einer Bedienkabine des Oberwagens 16 kann sich eine Steuerung 60 für die Tiefbaumaschine 10 befinden. Insbesondere über einen Anlenkmechanismus 18 kann an dem Oberwagen 16 zum Bilden einer Hebeeinrichtung eine balkenartige Maschinenkomponente, insbesondere ein hier dargestellter Mast 20, vorzugsweise verstellbar gelagert sein. Der Mast 20 kann vorzugsweise als ein Mäkler 21 mit einer Linearführung 24 entlang des Mastes 20 ausgebildet sein und kann im Betrieb eine im Wesentlichen vertikale Position aufweisen. Die balkenartige Maschinenkomponente, insbesondere der Mast 20, kann auch über ein im unteren Bereich der balkenartigen Maschinenkomponente angeordnetes, nicht dargestelltes Gelenk sowie einen oder mehrere nicht dargestellte Stellzylinder direkt mit dem Oberwagen 16 verbunden sein. Ebenso ist es im Sinne der Erfindung auch möglich, dass die balkenartige Maschinenkomponente anstelle des Masts 20 ein nicht dargestellter anwinkelbarer Ausleger ist, welcher verstellbar am Oberwagen 16 angeordnet sein kann.

Gemäß dem dargestellten Ausführungsbeispiel kann der Mast 20 vorzugsweise als Mäkler 21 mit einer Linearführung 24 an seiner Vorderseite ausgebildet sein. Entlang der Linearführung 24 kann etwa ein Arbeitsschlitten 38 mit einem Drehbohrantrieb 36 vertikal verfahrbar gelagert sein. Hierdurch kann die Tiefbaumaschine 10 als ein Bohrgerät ausgeführt werden. In der Zeichnung ist eine beispielhafte mittlere Position des Drehbohrantriebes 36 sowie eine untere Position mit unterbrochener Linienführung dargestellt.

Über einen Mastkopf 22 am oberen Ende des Mastes 20 kann ein Seil 40 geführt sein, an dessen einem Ende eine vorzugsweise teleskopierbare Kellystange 32 mit einer beispielhaften Bohrschnecke 34 zum Bilden eines Tiefbauwerkzeuges 30 vorgesehen sein kann. Die Kellystange 32 kann durch ein hülsenförmiges Antriebsrad des Drehbohrantriebes 36 am Arbeitsschlitten 38 geführt sein, so dass ein Drehmoment von dem Drehbohrantrieb 36 etwa über nicht dargestellte Mitnehmerleisten auf die Kellystange 32 übertragen werden kann. Am unteren Ende der Kellystange 32 kann die Bohrschnecke 34 zum Erstellen eines Bohrloches im Boden angeordnet sein. Das Bohrwerkzeug kann grundsätzlich beliebig ausgebildet sein und insbesondere eine Bohrschnecke 34 oder einen Bohreimer aufweisen.

Von der Kellystange 32 kann das Seil 40 über Umlenkrollen 26 am Mastkopf 22 entlang des Mastes 20 bis zu einer Seilwinde 46 im Oberwagen 16 geführt sein. Die Seilwinde 46 ist über einen Elektromotor 50 angetrieben, welcher auch in einem Rekuperationsmodus betrieben werden kann. Über die Seilwinde 46 kann mittels des Seiles 40 die Kellystange 32 mit der Bohrschnecke 34 gehoben und gesenkt werden. Beim Senken kann Lageenergie durch den Elektromotor 50 in elektrische Energie umgewandelt und an einen Zwischenkreis abgegeben werden, welcher nachfolgend näher beschrieben wird.

Über einen Stellantrieb 28 mit Winde am Mast 20 kann über ein weiteres Stellseil 29 der Arbeitsschlitten 38 mit dem Drehbohrantrieb 36 nach oben gezogen werden. Durch entsprechendes Antreiben des Stellantriebes 28 in die gegengesetzte Richtung kann der Arbeitsschlitten 38 mit dem Drehbohrantrieb 36 auch nach unten abgelassen werden. Ebenso kann der Arbeitsschlitten 38 durch den Stellantrieb 28 nach unten gezogen werden Der Drehbohrantrieb 36 kann durch einen Kraftdrehkopf mit mindestens einem weiteren Elektromotor gebildet sein. Der Stellantrieb 28 kann ebenfalls mit einem nicht dargestellten Elektromotor ausgestattet sein, welcher ebenso im Rekuperationsmodus betrieben werden kann. Der Arbeitsschlitten 38 mit dem Drehbohrantrieb 36 kann ebenfalls als Teil der Tiefbauwerkzeugs 30 angesehen werden.

Über die Steuerung 60 wird der mindestens eine Elektromotor 50 zum Betreiben der Seilwinde 46 und vorzugsweise auch der weitere Elektromotor zum Betreiben des als Winde ausgebildeten Stellantriebes 28 angesteuert.

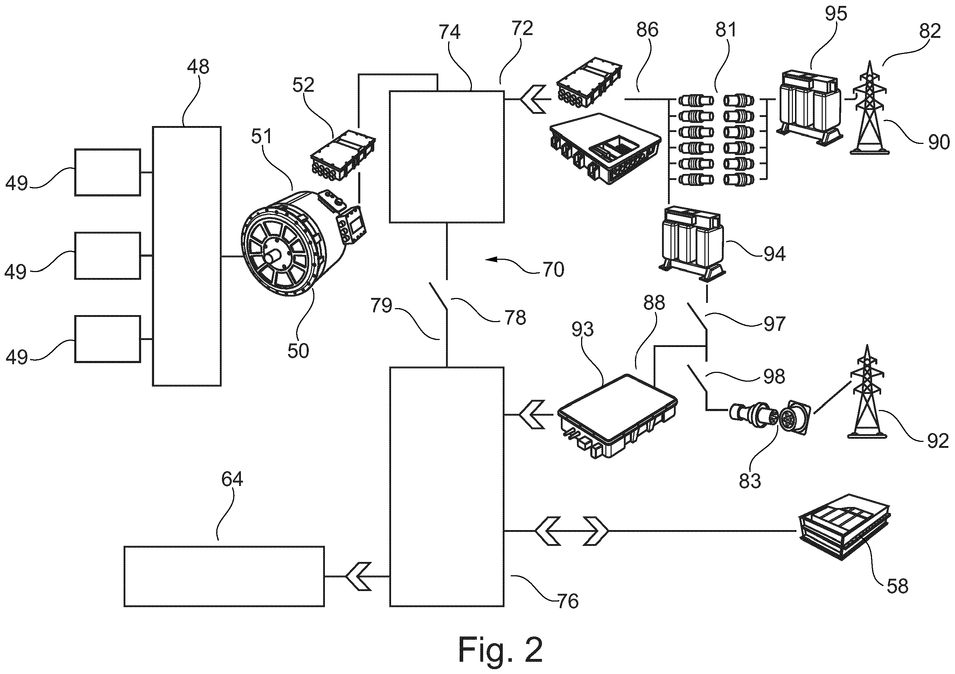

In Fig. 2 ist schematisch eine erfindungsgemäße Schaltungsanordnung 70 mit einem ersten Zwischenkreis 74 und einem zweiten Zwischenkreis 76 dargestellt, wobei der erste Zwischenkreis 74 insbesondere als Gleichstrom-betriebener DC-Link mit einer definierten Spannung von beispielsweise 1100 Volt ausgebildet sein kann. Der zweite Zwischenkreis 76 kann vorzugsweise mit einer definierten Spannung von 600 Volt bis 800 Volt, aber auch mit niedrigeren Spannungen von etwa 400 Volt, ebenfalls mit Gleichstrom betrieben werden.

Der erste Zwischenkreis 74 kann zur primären Energieversorgung mit einer ersten Zuführeinrichtung 86 mit einer externen Energiequelle 82 verbindbar ausgebildet sein. Die Energiequelle 82 kann insbesondere ein Wechselstromnetz sein. Die Wechselspannung kann beispielhaft 690 Volt betragen. Die Zuführeinrichtung 86 kann vorzugsweise Anschlussstecker oder -klemmen und eine Wandlereinheit umfassen. Die Verbindung zu der ersten Zuführeinrichtung 86 kann also vorzugsweise mit einer lösbaren ersten Steckverbindung 81 an der Tiefbaumaschine 10 erfolgen.

Die Energieübertragung von der Energiequelle 82 zu dem Zwischenkreis 74 kann insbesondere über einen Trenntrafo 95 und eine Wandlereinrichtung zum Wandeln des Wechselstroms in Gleichstrom erfolgen. Vorteilhaft ist es insbesondere, wenn die Zuführeinrichtung 86 zur Wandlung von Wechselspannung in Gleichspannung ausgebildet ist.

Zur weiteren Energieversorgung kann auch der zweite Zwischenkreis 76 eine zweite Zuführeinrichtung 88 zum Verbinden der Schaltungsanordnung 70 mit einem zweiten elektrischen Stromnetz 92 aufweisen. Das zweite elektrische Stromnetz 92 kann beispielsweise eine Wechselspannung von etwa 400 Volt führen. Die Zuführeinrichtung 88 kann insbesondere eine Wandlereinheit, vorzugsweise einen Onboardcharger 93 und eine lösbare zweite Steckverbindung 83 aufweisen.

Der in Fig. 2 schematisch dargestellte Onboardcharger 93 kann insbesondere die AC-Spannung der zweiten Steckverbindung 83 in die für den zweiten Zwischenkreis 76 benötigte DC-Spannung umwandeln.

Mit dem zweiten Zwischenkreis 76 können, wie hier abgelichtet, eine Batterieeinheit 58 und weitere elektrische Verbrauchseinheiten 64 elektrisch verbunden sein. Zum Betrieb der elektrischen Verbrauchseinheiten 64 kann elektrische Energie der mindestens einen Batterieeinheit 58 zu- oder abgeführt werden. Die interne Batterieeinheit 58 kann grundsätzlich wechselbar, insbesondere als ein Wechselakkumulator, ausgebildet sein.

Die Schaltungsanordnung 70 besteht gemäß der Erfindung nicht aus einem einheitlichen Zwischenkreis 72. Vielmehr umfasst die Schaltungsanordnung 70 zumindest einen ersten Zwischenkreis 74 und einen zweiten Zwischenkreis 76, die mit einer Schalteinrichtung 78 verbindbar sind. Das bedeutet, dass durch Betätigung der Schalteinrichtung 78 die Zwischenkreise 74, 76 zu einem Gesamtkreis 79 verbindbar sind. Durch die so hergestellte elektrische Verbindung kann elektrische Energie beliebig von dem einen in den anderen Zwischenkreis 74, 76 - abhängig von Leistungsbedarf und Betriebszustand - verteilt werden. Beispielsweise kann Energie aus der Batterieeinheit 58 abgeführt werden und über die Schalteinrichtung 78 einem Elektromotor 51 als Verbrauchseinheit 50 zugeleitet werden. Der Elektromotor 51 kann beispielsweise über ein Verteilergetriebe 48 eine oder mehrere Komponenten 49 antreiben, etwa Pumpen, insbesondere Hydraulikpumpen. Die Schalteinrichtung 78 kann vorzugsweise als Schützschalter, DC/DC- Steller und/oder als Inverter ausgebildet sein.

Die Energieversorgung der erfindungsgemäßen Schaltungsanordnung 70 mit dem ersten Zwischenkreis 74 und dem zweiten Zwischenkreis 76 kann grundsätzlich vielfältig ausgestaltet sein. Vorteilhaft ist es entsprechend dem in Fig. 2 gezeigten zweiten Zwischenkreis 76, dass die zweite Zuführeinrichtung 88 ausgebildet sein kann, elektrische Energie aus dem zweiten elektrischen Stromnetz 92 und/oder aus dem ersten elektrischen Stromnetz 90 mittels eines Trenntrafos 95 zu erhalten.

Die zweite Zuführeinrichtung 88 kann insbesondere einen Onboardcharger 93, eine lösbare Steckverbindung 83 und/oder mindestens eine zusätzliche Schalteinrichtung 97, 98 umfassen. Insbesondere mit einer ersten zusätzlichen Schalteinrichtung 97 kann die zweite Zuführeinrichtung 88 wahlweise zum Zuführen von elektrischer Energie zu dem zweiten Zwischenkreis 76 aus dem ersten elektrischen Stromnetz 90 ausgebildet sein. Mit einer zweiten zusätzlichen Schalteinrichtung 98 kann die Zuführeinrichtung 88 wahlweise zum Zuführen von elektrischer Energie zu dem zweiten Zwischenkreis 76 aus dem zweiten elektrischen Stromnetz 92 ausgebildet sein. In Fig. 2 ist insbesondere eine Betriebsart mit geöffneten Schalteinrichtungen 78, 97, 98 gezeigt, wobei elektrische Energie aus dem ersten elektrischen Stromnetz 90 mit der ersten Zuführeinrichtung 86 dem ersten Zwischenkreis 74 zugeführt wird. Der zweite Zwischenkreis 76 kann aus dem zweiten elektrischen Stromnetz 92, beispielsweise zum Laden einer Batterieeinheit 58 oder zum Versorgen von elektrischen Verbrauchseinheiten 64, insbesondere Peripherieeinheiten und oder Kühleinheiten, gespeist werden.

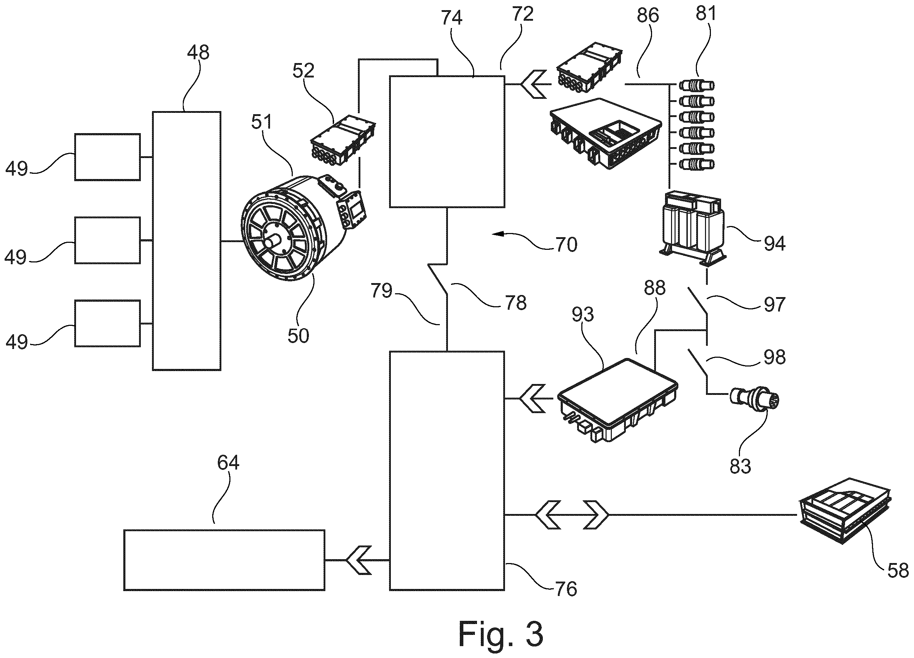

Die erfindungsgemäße Tiefbaumaschine 10 kann mit dem ersten Zwischenkreis 74 und dem zweiten Zwischenkreis 76 auf vielfältige Weise mit elektrischer Energie versorgt werden. Die Schaltungsanordnungen 70, welche nachfolgend im Zusammenhand mit den Figuren 3 bis 7 beschrieben werden, können vorzugsweise wie die Schaltungsanordnung 70 von Fig. 2 ausgebildet sein, wobei gleiche Elemente mit dem gleichen Bezugszeichen versehen sind und zur Vermeidung von Wiederholungen nicht mehrfach beschrieben werden.

Gemäß der in Fig. 3 schematisch dargestellten erfindungsgemäßen Schaltungsanordnung 70 kann der erste Zwischenkreis 74 mit dem zweiten Zwischenkreis 76, insbesondere für einen Verfahr- und Rüstbetrieb, mit der Schalteinrichtung 78 verbunden werden. Wie in Fig. 3 gezeigt, muss die erste Zuführeinrichtung 86 dabei nicht mit einer externen Energiequelle, also einem Stromnetz, verbunden sein. Die Steckverbindungen 81, 83 zu externen Energiequellen können gelöst sein. Die Energieversorgung der erfindungsgemäßen Tiefbaumaschine 10 erfolgt vielmehr durch die Batterieeinheit 58, die mit dem zweiten Zwischenkreis 76 verbunden ist. Dabei kann die Spannungslage des ersten Zwischenkreises 74 und des zweiten Zwischenkreises 76 vorzugsweise dem Spannungsniveau der Batterieeinheit 58 entsprechen. Das Spannungsniveau kann insbesondere etwa 600 Volt bis 800 Volt, aber ebenso etwa 300 Volt bis 400 Volt betragen und vom Ladezustand der Batterieeinheit 58 abhängen.

Nach der in Fig. 3 gezeigten Betriebsanordnung kann die erfindungsgemäße Tiefbaumaschine 10 insgesamt rein batterieelektrisch betrieben werden, insbesondere für ein Verfahren der Tiefbaumaschine 10 etwa bis zu einigen hundert Metern von einer ersten Einsatzposition zu einer zweiten Einsatzposition an einer Baustelle oder für einen Rüstbetrieb.

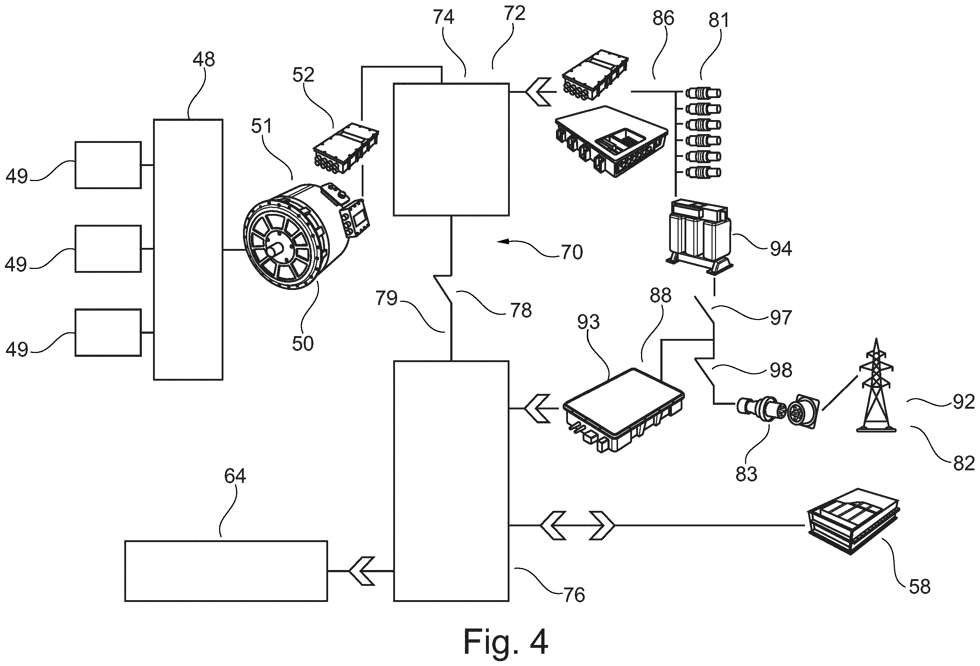

Wie in Fig. 4 veranschaulicht, kann in einer weiteren Betriebsart zusätzlich durch Anschluss der zweiten Zuführeinrichtung 88 an ein zweites elektrisches Stromnetz 92, insbesondere mit einer Wechselspannung von 400 Volt, elektrische Energie zugeführt werden. Dies ist aber nicht zwingend erforderlich. Ein zweiter Zwischenkreis 76, wie in Fig. 4 gezeigt, kann aus dem zweiten Stromnetz 92, beispielsweise zum Laden einer Batterieeinheit 58 oder zum Versorgen von elektrischen Verbrauchseinheiten 64, insbesondere Peripherieeinheiten, gespeist werden.

In der jeweils in Fig. 3 und Fig. 4 gezeigten Konfiguration kann auch ein Maschinenbetrieb mit ggf. eingeschränkter Leistung aufgrund des niedrigeren Spannungsniveaus im ersten Zwischenkreis 74 erfolgen.

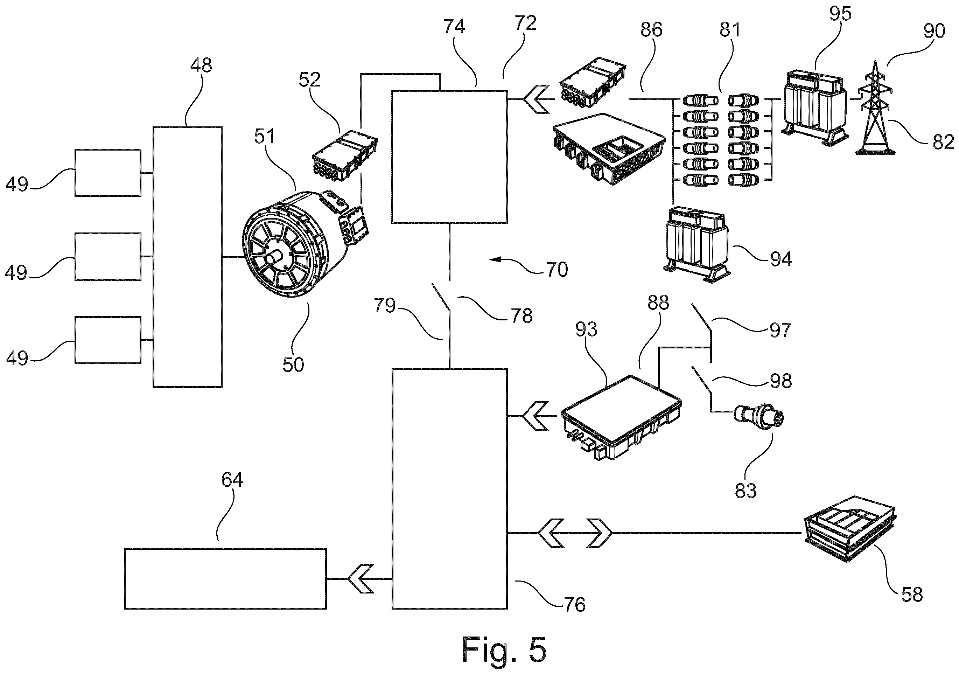

Gemäß Fig. 5 kann die Schaltungsanordnung 70, insbesondere zur Energieversorgung eines Zwischenkreises 72 im regulären Maschinenbetrieb, an ein 690 Volt-Wechselspannungsnetz angeschlossen werden. Im regulären Maschinenbetrieb kann ein zweiter Zwischenkreis 76, wie in Fig. 5 gezeigt, vorzugsweise aus dem 690 Volt-Wechselspannungsnetz als erstes Stromnetz 90 mit einer zweiten Zuführeinrichtung 88, umfassend eine geschlossene Schalteinrichtung 97 und einen Onboardcharger 93, mit einem Trenntrafo 95 und mit einer Transformatoreinheit 94 gespeist werden, wobei eine Schalteinrichtung 78 geöffnet ist. Die Versorgung des ersten Zwischenkreises 74 erfolgt hierbei insbesondere über die erste Zuführeinrichtung 86. Die Versorgung des zweiten Zwischenkreises 76 kann vorzugsweise ebenfalls aus dem 690 Volt-Wechselspannungsnetz als erstem Stromnetz 90 mit der Transformatoreinheit 94, der geschlossenen Schalteinrichtung 97 und mit dem Onboardcharger 93 erfolgen, wobei die Transformatoreinheit 94 insbesondere zum Wandeln einer Spannungslage von 690V zu einer Spannungslage von 400V ausgebildet seien kann. Die peripheren Verbraucher wie beispielsweise die Kühlung, aber auch die Batterieeinheit 58 können so mit elektrischer Energie versorgt werden. Die Spannung des ersten Zwischenkreises 74 kann mit geöffneter Schalteinrichtung 78 vorzugsweise über der Spannung des zweiten Zwischenkreises 76 liegen, wobei die Differenz insbesondere zwischen etwa 500 Volt und 300 Volt betragen kann.

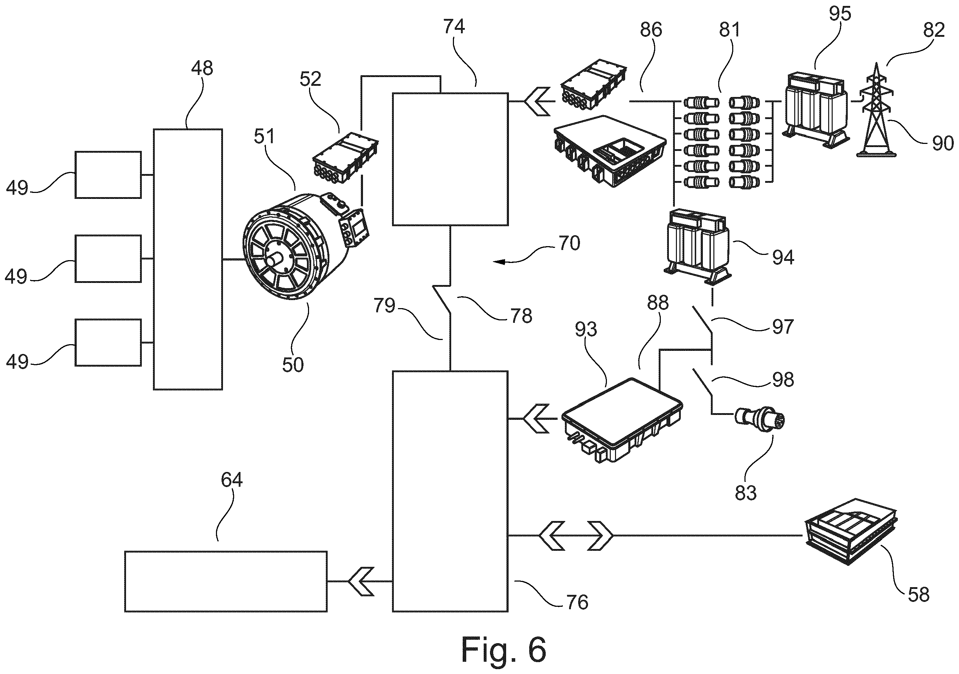

Alternativ dazu kann eine erfindungsgemäße Tiefbaumaschine 10 gemäß einer in Fig. 6 schematisch gezeigten Schaltungsanordnung 70 in einem eingeschränkten Maschinenbetrieb betrieben werden, wobei eine erste Zuführeinrichtung 86 eines ersten Zwischenkreises 74 mit einer lokalen 400 Volt-Wechselspannung verbunden ist. Hierbei können der erste Zwischenkreis 74 und ein zweiter Zwischenkreis 76 vorzugsweise mit der geschlossenen Schalteinrichtung 78 verbunden sein, wobei das resultierende Gesamtspannungsniveau dem Batteriespannungsniveau der Batterieeinheit 58 entsprechen kann.

Ebenso besteht die Möglichkeit, dass der erste Zwischenkreis 74 und der zweite Zwischenkreis 76 elektrisch nicht verbunden sind, wobei die Spannung des ersten Zwischenkreises 74 über der Spannung des zweiten Zwischenkreises 76 liegt. Hierbei kann die Energieversorgung einer zweiten Zuführeinrichtung 88 vorzugsweise aus dem ersten elektrischen Stromnetz 90, insbesondere mit einer Spannungslage von 400V, erfolgen.

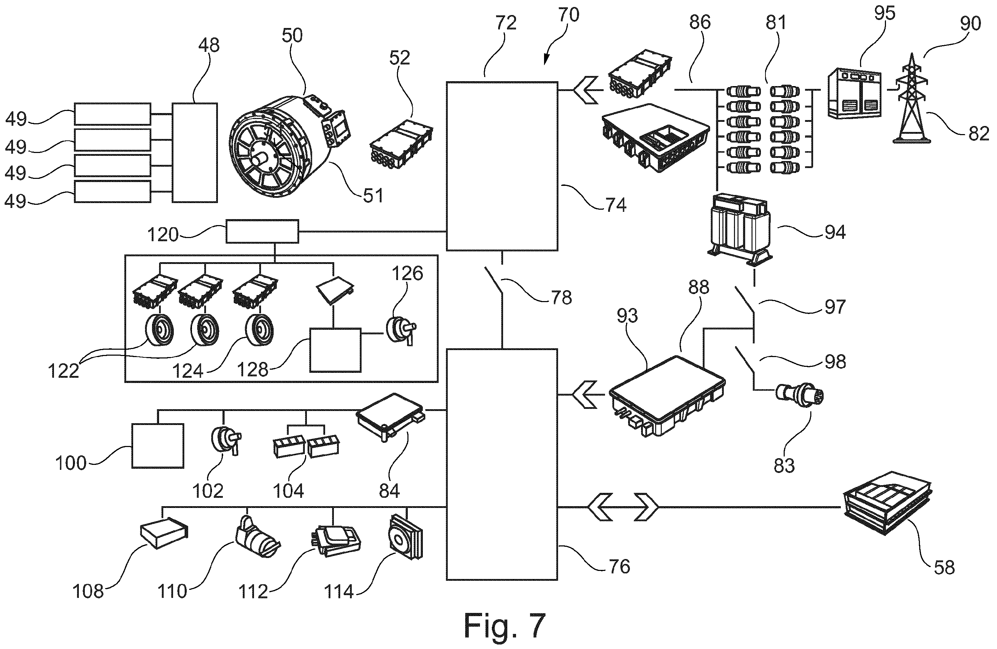

Fig. 7 zeigt eine Betriebsart einer erfindungsgemäßen Schaltungsanordnung 70 im regulären Maschinenbetrieb. Zusätzlich sind in Fig. 7 beispielhaft verschiedene weitere mögliche Verbrauchseinheiten schematisch dargestellt, die jeweils einem Zwischenkreis zugeordnet sind. Die elektrischen Verbrauchereinheiten können grundsätzlich beliebig einem Zwischenkreis zugeordnet sein. Nach der in Fig. 7 gezeigten erfindungsgemäßen Schaltungsanordnung 70 kann ein erster Zwischenkreis 74 vorzugsweise als Leistungsteil zum Betrieb mindestens eines Elektromotors 51, der über ein Verteilergetriebes 48 Komponenten 49, wie eine oder mehrere Pumpen, eine oder mehrere Winden, einen oder mehrere Drehantriebe, einen oder mehrere Bohrantriebe, ein Fahrwerk, und/oder einen oder mehrere Stellzylinder, antreibt, sowie zum Betrieb einer Fräse 120, insbesondere etwa zum Antrieb eines oder mehrerer Fräsradmotore 122, einer oder mehrerer Motorförderpumpen 124, einer oder mehrerer Spülmittelpumpen 126 und/oder zum Betrieb eines Niederspannungsfräsnetzes 128, ausgebildet sein.

Weiterhin kann vorzugsweise ein zweiter Zwischenkreis 76 mit geringerer Spannung zum Betrieb einer Batterieeinheit 58 sowie peripherer Verbrauchseinheiten, insbesondere einer Batterieklimatisierung 108, einem Klimakompressor 110, einem Heizer 112 und/oder einem Lüfterantrieb 114 vorgesehen sein. Diese Verbrauchseinheiten können grundsätzlich mit einem (nicht gezeigten) DC/DC-Steller oder einer sonstigen Wandlereinheit mit dem zweiten Zwischenkreis 76 verbunden sein.

Alternativ oder ergänzend dazu kann ein Niederspannungskreis 100, insbesondere ein 12 Volt-, 24 Volt- oder 48 Volt-Bordnetz, mittels eines DC/DC-Stellers 84 dem zweiten Zwischenkreis 76 zugeordnet sein. Gemäß der in Fig. 7 abgebildeten Ausführungsvariante kann der Niederspannungskreis 100 eine Wasserpumpe 102 und zwei in Reihe geschaltete 12 V Batterien 104 aufweisen.

## Patentansprüche

1. Elektrisch betriebene Tiefbaumaschine (10) mit
- einem mobilen Trägergerät (12),
- mindestens einer elektrischen Verbrauchseinheit (50),
- mindestens einer internen aufladbaren Batterieeinheit (58) zum Speichern und Abgeben von elektrischer Energie,
- mindestens einer Zuführeinrichtung (86) zum Zuführen elektrischer Energie von einer externen Energiequelle (82) und
- einer Schaltungsanordnung (70) zum bedarfsgerechten Zuführen und Abführen von elektrischer Energie an die und von der mindestens einen elektrischen Verbrauchseinheit (50), wobei die Schaltungsanordnung (70) ausgebildet ist, mittels eines Zwischenkreises (72) elektrische Energie zwischen der mindestens einen elektrischen Verbrauchseinheit (50) und der Zuführeinrichtung (86) zu verteilen,
dadurch**gekennzeichnet,**
dass die Schaltungsanordnung (70) einen ersten Zwischenkreis (74) und einen zweiten Zwischenkreis (76) umfasst,
dass der erste Zwischenkreis (74) mit einer ersten Spannungslage betreibbar ist und
dass der zweite Zwischenkreis (76) mit einer zweiten Spannungslage betreibbar ist, welche unterschiedlich zu der ersten Spannungslage ist.

2. Elektrisch betriebene Tiefbaumaschine (10) nach Anspruch 1,
dadurch**gekennzeichnet**,
dass mindestens zwei Zwischenkreise (74, 76) vorgesehen sind.

3. Elektrisch betriebene Tiefbaumaschine (10) nach Anspruch 1 oder 2,
dadurch**gekennzeichnet**,
dass die Zwischenkreise (74, 76) unabhängig voneinander als geschlossene Stromkreise betreibbar sind und
dass zwei Zwischenkreise (74, 76) mit einer Schalteinrichtung (78), insbesondere einer Trenneinrichtung, zu einem Gesamtkreis (79) verbindbar sind.

4. Elektrisch betriebene Tiefbaumaschine (10) nach einem der Ansprüche 1 bis 3, dadurch**gekennzeichnet**,
dass ein Zwischenkreis (76) zum Zuführen und Abführen von elektrischer Energie in die Batterieeinheit (58) ausgebildet ist, wobei die Batterieeinheit (58) zur Steuerung der Spannungslage zum Ausgleich von Leistungsspitzen des Zwischenkreises (76) ausgebildet ist.

5. Elektrisch betriebene Tiefbaumaschine (10) nach einem der Ansprüche 1 bis 4, dadurch**gekennzeichnet**,
dass mindestens eine Verbrauchseinheit (64) einen DC/DC -Steller (84) umfasst.

6. Elektrisch betriebene Tiefbaumaschine (10) nach einem der Ansprüche 1 bis 5, dadurch**gekennzeichnet**,
dass die Zwischenkreise (74, 76) zum Leiten und Verteilen von Gleichstrom ausgebildet sind.

7. Elektrisch betriebene Tiefbaumaschine (10) nach einem der Ansprüche 1 bis 6, dadurch**gekennzeichnet,**
dass die mindestens eine elektrische Verbrauchseinheit (50) als Elektromotor (51) ausgebildet ist, wobei dem Elektromotor (51) eine Invertereinheit (52) zugeordnet ist, welche zur Umsetzung von Gleichstrom in Wechselstrom ausgebildet ist.

8. Elektrisch betriebene Tiefbaumaschine (10) nach einem der Ansprüche 1 bis 7, dadurch**gekennzeichnet**,
dass eine erste Zuführeinrichtung (86) zum Zuführen und Wandeln von elektrischer Energie, insbesondere Wechselspannung, aus einem ersten elektrischen Stromnetz (90) mit einer ersten Spannung ausgebildet ist und
dass eine zweite Zuführeinrichtung (88) zum Zuführen und Wandeln von elektrischer Energie, insbesondere Wechselspannung, aus einem zweiten elektrischen Stromnetz (92) mit einer zweiten Spannung ausgebildet ist, wobei die zweite Spannung unterschiedlich zu der ersten Spannung ist.

9. Elektrisch betriebene Tiefbaumaschine (10) nach Anspruch 8,
dadurch**gekennzeichnet,**
dass der zweiten Zuführeinrichtung (88) eine Transformatoreinheit (94) zugeordnet ist und die zweite Zuführeinrichtung (88) zum Zuführen und Wandeln von elektrischer Energie aus dem ersten elektrischen Stromnetz (90) mit der ersten Spannung ausgebildet ist.

10. Verfahren zum elektrischen Betreiben einer Tiefbaumaschine (10), insbesondere nach einem der Ansprüche 1 bis 9, mit
- einem mobilen Trägergerät (12),
- mindestens einer elektrischen Verbrauchseinheit (50),
- mindestens einer internen aufladbaren Batterieeinheit (58) zum Speichern und Abgeben von elektrischer Energie,
- mindestens einer Zuführeinrichtung (86) zum Zuführen elektrischer Energie von einer externen Energiequelle (82) und
- einer Schaltungsanordnung (70) zum bedarfsgerechten Zuführen und Abführen von elektrischer Energie an die und von der mindestens einen elektrischen Verbrauchseinheit (50), wobei die Schaltungsanordnung (70) mittels eines Zwischenkreises (72) elektrische Energie zwischen der mindestens einen elektrischen Verbrauchseinheit (50) und der Zuführeinrichtung (86) verteilt,
dadurch**gekennzeichnet**,
dass die Schaltungsanordnung (70) einen ersten Zwischenkreis (74) und einen zweiten Zwischenkreis (76) umfasst,
dass der erste Zwischenkreis (74) mit einer ersten Spannungslage betrieben wird und
dass der zweite Zwischenkreis (76) mit einer zweiten Spannungslagebetrieben wird, welche unterschiedlich zu der ersten Spannungslage ist.

11. Verfahren nach Anspruch 10
dadurch**gekennzeichnet**,
dass die Zwischenkreise (74, 76) unabhängig voneinander als geschlossene Stromkreise betrieben werden und
dass bei Bedarf die Zwischenkreise mittels einer Schalteinrichtung (78), insbesondere einem DC/DC-Steller, zu einem Gesamtkreis (79) verbunden werden, wobei elektrische Energie zwischen den beiden Zwischenkreisen bedarfsmäßig verteilt wird.

12. Verfahren nach Anspruch 10 oder 11,
dadurch**gekennzeichnet**,
dass mittels einer ersten Zuführeinrichtung (86) elektrische Energie, insbesondere Wechselspannung, aus einem ersten elektrischen Stromnetz (90) mit einer ersten Spannung zugeführt und insbesondere gewandelt wird und
dass mittels einer zweiten Zuführeinrichtung (88) elektrische Energie, insbesondere Wechselspannung, aus einem zweiten elektrischen Stromnetz (92) mit einer zweiten Spannung zugeführt und insbesondere gewandelt wird, wobei die zweite Spannung unterschiedlich zu der ersten Spannung ist.
